# EUROPÄISCHE PATENTSCHRIFT

(11) **EP 4 010 124 B1**
(45) Veröffentlichungstag und Bekanntmachung des Hinweises auf die Patenterteilung: **04.10.2023**
(21) Anmeldenummer: 20754704.3
(22) Anmeldetag: 06.08.2020
(51) Int. Cl.: B04B 9/14, B04B 13/00

(54) **ZENTRIFUGE**
CENTRIFUGE
CENTRIFUGEUSE

(30) Priorität: 09.08.2019 DE 102019121598
(43) Veröffentlichungstag der Anmeldung: 15.06.2022
(73) Patentinhaber: Andreas Hettich GmbH & Co KG, 78532 Tuttlingen (DE)
(72) Erfinder: HORNEK, Matthias, 78532 Tuttlingen (DE); RUNTZE, Albert, 78052 Villingen-Schwenningen (DE); HOELDERLE, Andreas, 78199 Braeunlingen-Doeggingen (DE); EBERLE, Klaus-Guenter, 78532 Tuttlingen (DE)
(74) Vertreter: Puschmann Borchert Kaiser Klettner Patentanwälte Partnerschaft mbB
(86) Internationale Anmeldenummer: PCT/EP2020/072200
(87) Internationale Veröffentlichungsnummer: WO 2021/028325

(56) Entgegenhaltungen:
- EP-A2- 0 431 645
- WO-A1-96/01697
- DE-A1-102004 002 110
- JP-A- 2015 020 123

## Beschreibung

Die Erfindung betrifft eine Zentrifuge gemäß der im Oberbegriff des Anspruches 1 angegebenen Art.

Das Zentrifugieren einer biologischen oder chemischen Probe zur Trennung der Probenbestandteile mittels eines Rotors einer Zentrifuge erfordert in der Regel hohe Winkelgeschwindigkeiten des Rotors. Dabei gibt es für verschiedene Proben auch verschiedene Probenbehälter und Rotoren, die mit einem Grundmodell einer Zentrifuge betrieben werden können. Dafür ist der Rotor auswechselbar mit einer Antriebswelle dieser Zentrifuge verbunden. Für einen bestimmten Trennvorgang wird ein Rotortyp auf der Grundlage der zugeordneten mechanischen Eigenschaften dieses Rotors ausgewählt. Die Verfügbarkeit einer Vielzahl von unterschiedlichen Typen von Rotoren vergrößert die vielseitige Anwendbarkeit der Zentrifuge unter anderem in der biologischen und chemischen experimentellen Forschung, aber auch bei Blutbanken und medizinischen Laboren.

Jeder Rotortyp hat eine Rotorkennung, aus der sich der Typ des Rotors und seine Eigenschaften ergeben, beispielsweise eine maximale, sichere Nenndrehzahl, die allgemein von den maximal zulässigen, durch Zentrifugalkräfte hervorgerufenen Beanspruchungen und Kräften abhängt. Ein Betrieb oberhalb der maximalen Nenndrehzahl, die für einen sicheren Betrieb des Rotors festgelegt ist, kann zu einem Rotorausfall - verbunden mit großen Schäden - führen. Deshalb ist es außerordentlich wichtig, dass von der Steuerung einer Zentrifuge erkannt wird, welcher Rotor im Einsatz ist und von der Zentrifuge betrieben wird und daraufhin die vorgegebenen Kennzahlen, wie maximale Drehzahl und ähnliches, während des Betriebs der Zentrifuge eingehalten werden.

Ebenso wichtig ist, dass eine zulässige maximale Laufzyklenzahl, nämlich Anzahl der Starts, nicht überschritten wird, da Rotoren durch die hohen Kräfte, die während des Laufs auf das Material einwirken, einen Alterungsprozess erfahren. Bei Überschreiten der Laufzyklenzahl kann es zum Bersten des Rotors kommen, was zu einer Zerstörung der Zentrifuge führt.

Bisher bekannte Rotor-Erkennungssysteme setzen zur Erfassung der Rotorkennung hauptsächlich auf magnetische oder optische Sensoren. Bei magnetischen Systemen werden am Rotor Magnete in bestimmten kreis- oder ringförmigen Anordnungen befestigt. Diesen Magneten sind am Gehäuse Magnetsensoren zugeordnet, beispielsweise Hall-Sensoren. Verschiedene Magnetstückzahlen aber auch die Abstände der Magnete am Rotor sind der Rotorkennung zugeordnet. Zur Erfassung der Rotorkennung dient der Magnetsensor. Über die Rotorkennung ordnet die Steuerung dem Rotor die maximal zulässige Drehzahl zu. Der eingesetzte Rotor wird dadurch immer mit einer bestimmten, maximal erlaubten Drehzahl verwendet. Eine solche Zentrifuge ist beispielsweise aus der EP 0 604 912 B1 bekannt.

Zusätzlich wird die Anzahl der Starts pro Rotorcode in der Steuerung gezählt und der Anwender hat damit die Möglichkeit, die Anzahl der Laufzyklen zu überwachen, was verlässlich funktioniert, solange ausschließlich ein Rotor immer in derselben Zentrifuge verbleibt.

Der Vorteil solcher Systeme ist, dass diese bewährt und robust sind und die am Rotor befindlichen Magnete auch viele Autoklaviervorgänge schadlos überstehen.

Nachteilig ist, dass die Anzahl der Codes von der Anzahl der Magnete abhängt und damit begrenzt ist. So werden baugleiche Rotoren immer mit dem gleichen Code ausgestattet. Werden mehrere baugleiche Rotoren in einer oder gar mehreren Zentrifugen eingesetzt, ist eine Zuordnung der Zyklenzahl zu einem bestimmten Rotor nicht mehr möglich.

Aus der DE 10 2004 002 110 A1 ist eine Zentrifuge mit einem Gehäuse bekannt, in dem ein Rotor zur Aufnahme einer zu zentrifugierenden Probe angeordnet ist. Der Rotor sitzt auf einer Antriebswelle lösbar auf, welche mit einem Antrieb verbunden ist. Während des Betriebs der Zentrifuge wird der Rotor von der Antriebswelle angetrieben und dreht sich um eine Drehachse. Der Rotor weist eine erste, rotorseitige Sende-Empfangseinheit mit einer Sende-Empfangs-Antenne in Form eines Transponders auf, welche über ein elektrisches Feld angeregt wird, wodurch Spannung in der ersten Sende-Empfangseinheit induziert wird. Der Transponder mit Sende-Empfangsantenne ist flach auf der Unterseite des Rotors angeordnet. Die erste Sende-Empfangseinheit ist einer zweiten, gehäuseseitigen Sende-Empfangseinheit zugeordnet, welche mit einer Spannungsquelle verbunden ist.

Bei dem Transponder handelt es sich um eine Sende-Empfangseinheit, die nach dem Abfrage-Antwort-Prinzip arbeitet. Ein vom Transponder empfangenes, codiertes Abfragesignal wird entschlüsselt und nach der Erkennung und sonstigen Informationen des Fragenden ausgewertet. Daraufhin wird automatisch ein codiertes, selektiv für den Anfragenden bestimmtes Antwortsignal mit den gewünschten Informationen ausgesendet, das beim Anfragenden ebenfalls automatisch entschlüsselt und ausgewertet wird. Dabei sind in dem Transponder alle rotorspezifischen Daten niedergelegt. Dies sind zum Beispiel: Baujahr, Seriennummer der Fertigung, maximaler Zentrifugen-Aktionsradius, maximale Drehfrequenz, Parameter für die Antriebssteuerung, Temperatur-Kompensationswerte, zulässige Unwuchtwerte, also zulässige Beschleunigungswerte, usw. Ferner sollen in dem Speicher des Transponders laufend weitere Daten eingespeichert werden können, wie beispielsweise Betriebsstunden, Laufzeiten, Anzahl der Starts, usw.

Die aus der DE 10 2004 002 110 A1 bekannte Zentrifuge hat den Nachteil, dass diese nur sehr unbefriedigend funktioniert und für Serienlaborzentrifugen nicht geeignet ist. Eine sicher funktionierende Datenübertragung wird nicht gewährleistet, da der Transponder, also die erste Sende-Empfangseinheit, mit Sende-Empfangs-Antenne an der Unterseite flach liegend auf dem Rotor horizontal angebracht und die zweite Sende-Empfangseinheit mit Sende-Empfangs-Antenne auf der Oberseite des Antriebsmotors flach liegend horizontal angeordnet ist. Beide Sende-Empfangseinheiten sind dabei jeweils auf einem ringförmigen Träger konzentrisch zur Drehachse, jedoch im Hinblick auf die Höhe der Drehachse, beabstandet angeordnet. Durch diese Anordnung der Sende-Empfangseinheiten mit Sende-Empfangs-Antennen am Rotor und am Antriebsmotor wird die Funktion durch hinter der ersten und zweiten Sende-Empfangseinheit liegende Metalle am Rotor und am Antriebsmotor gestört. Zudem sind die Rotortypen in ihren Maßen unterschiedlich ausgestaltet, so dass der Abstand der Sende-Empfangs-Antennen je nach Rotortyp variiert. Durch die verschiedenen Maße der Rotortypen und einer Summe von Toleranzen in axialer Richtung ist kein definierter Abstand zwischen erster und zweiter Sende-Empfangs-Antenne möglich.

Eine gattungsbildende Zentrifuge ist aus der JP 2015-20 123 A bekannt, welche eine Zentrifuge mit einer ringförmigen Datenspeichervorrichtung mit einem IC-Chip offenbart. In dem Speicher werden Daten zur Identifizierung und Verwaltung eines Rotors der Zentrifuge gespeichert. Bei dem Speicher des IC-Chips handelt es sich um einen nichtflüchtigen Speicher, in dem die gespeicherten Daten nicht gelöscht werden, wenn der Strom abgeschaltet ist. Der IC-Chip ist mit einem Anschluss über eine Verdrahtung innerhalb der Datenspeichervorrichtung 42 versehen. Die Daten, die zur Identifizierung und Verwaltung des Rotors dienen, sind z. B. der Typ, die Fertigungsnummer, die Anzahl der Benutzungen, die kumulative Nutzungszeit und dergleichen. Von diesen sind die Anzahl der Benutzungszeiten und kumulative Nutzungszeit wiederbeschreibbare Daten für das Life-Management.

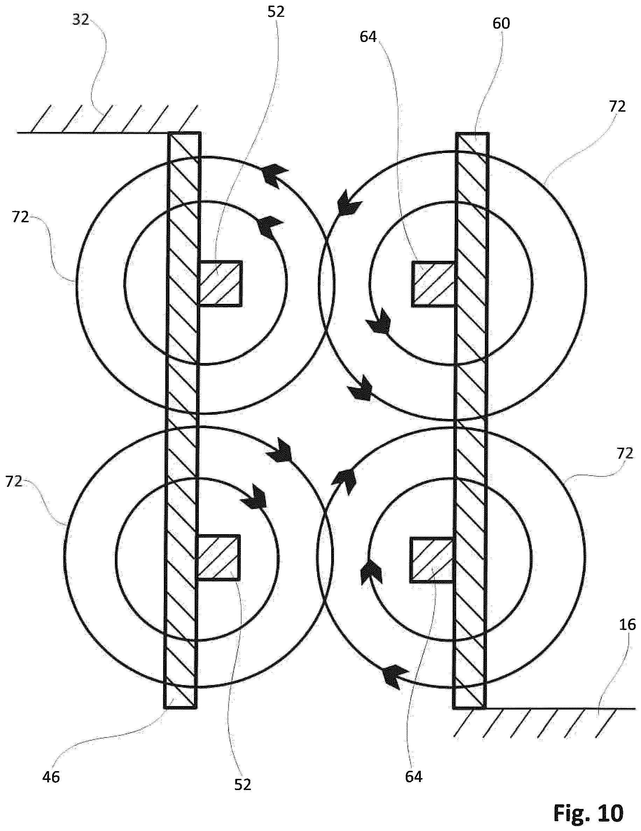

Wenn sich die rotierende Welle 7a (Schritt 102, Fig. 10) dreht, z.B. nachdem der Strom aufgrund eines Stromausfalls o.ä. während des Betriebs abgeschaltet wurde, wird der Strom in Schritt 101 aufgrund der Wiederherstellung wieder eingeschaltet, und es wird angenommen, dass sich der Rotor 30 aufgrund von Trägheit weiterdreht. Daher wartet der Prozess in diesem Fall, bis die Drehung des Rotors 30 in Schritt 102 gestoppt wird. Der Begriff "Stopp" kann hier z. B. eine ausreichend langsame Rotationsgeschwindigkeit von etwa 1 Umdrehung pro Sekunde oder weniger einschließen und ist nicht auf einen streng stationären Zustand beschränkt. Ferner ist in der vorliegenden Ausführungsform das Rechenwerk 14a so konfiguriert, dass es den Stellantrieb 70 so steuert, dass er sich im nicht erregten Zustand (AUS-Zustand) befindet, wenn die Drehung der rotierenden Welle 7a erkannt wird.

Die Recheneinheit 14a hält den Stellantrieb 70 im nicht erregten Zustand (AUS-Zustand). Wenn sich die rotierende Welle 7a dreht, und wenn die rotierende Welle 7a angehalten wird, wird der Stellantrieb 70 betätigt. Der Stellantrieb wird eingeschaltet (Schritt 103), um die Anschlussklemme 50 und die Spitze 50a auf eine Anschlussposition zu bewegen, an der der Anschluss (Elektrode) 43 des Adapters 40 Kontakt hat. Dementsprechend wird beim Drehen der rotierenden Welle 7a die Anschlussklemme 50 auf eine Position zurückgezogen, in der der Anschluss (Elektrode) 43 des Adapters 40Kontakt hat. In der Position, an der sie nicht mit dem Anschluss (Elektrode) 43 des Adapters 40 in Berührung kommen, drehen die Anschlussklemme 50 und der Hebel 60 den Rotor 30. Es kommt zu keiner Beeinträchtigung Dann bestimmt das Rechenwerk 14a, ob Daten an die Datenspeichervorrichtung 42 (IC-Chip 44) übertragen oder von dieser empfangen werden können oder nicht. Hierdurch wird bestimmt, ob der Rotor 30 an der Kupplungseinheit 12 befestigt ist oder nicht. Da der Anschluss (Elektrode) 43 wie oben beschrieben eine durchgehende Ringform hat, kann der Benutzer den Rotor 30 in jeder Position mit dem Kupplungsteil 12 verbinden. Die Anschlussklemme 50 und der Anschluss (Elektrode) 43 stehen immer in Kontakt miteinander, so dass Strom zugeführt werden kann und Daten gesendet und empfangen werden können. Wenn außerdem Form und Größe der Anschlussklemme 50 angemessen gewählt sind, kann die Anschlussklemme (Elektrode) 43 einen kurzen unterbrochenen Abschnitt, wie z. B. eine C-Form, aufweisen.

Wenn in Schritt 104 festgestellt wird, dass Daten an die Datenspeichervorrichtung 42 (IC-Chip 44) gesendet/empfangen werden können, und der Rotor 30 an die Kopplungseinheit 12 angeschlossen ist, bewirkt die Berechnungseinheit 14a den Betrieb des Rotors 30. Das heißt, die Datenspeichervorrichtung 42 (IC-Chip 44) liest die Daten einschließlich der Identifikationsinformationen zur Identifizierung des Rotors 30, wie z.B. den Typ und die Seriennummer, und den Benutzungssatz einschließlich der Anzahl der Benutzungen und der kumulativen Benutzungszeit (Schritt 107). Der angebrachte Rotor 30 wird auf der Grundlage der gelesenen Identifikationsinformationen spezifiziert (Schritt 108).

Aus der FR 2 428 821 ist allgemein eine Vorrichtung zur digitalen Signalübertragung für ein rotierendes Gerät bekannt, das zwei koaxial zueinander angeordnete Spulen in unmittelbarer Nähe zueinander und zentriert auf der Drehachse des Geräts aufweist. Eine der Spulen ist fest mit einem Rotor und die andere mit einem Stator verbunden. Eine der Spulen wird mit einem zu übertragenden Signal versorgt. Die andere Spule dient als Empfänger. Der radiale Abstand zwischen den Spulen liegt innerhalb von 25% ihres Durchmessers. Der Abstand der Spulen zu den Metallmassen muss ausreichend sein und liegt innerhalb von 25% des Durchmessers der Spulen, beträgt aber mehr als 1% des Durchmessers der Spulen. Die Spulen sind dabei in Kunststoffharz oder Isoliermaterial eingebettet, um magnetische Verluste zu vermeiden. Die Spulen dienen als Transformatoren zur Versorgung mit elektrischer Energie von der Maschine zum Rotor, ohne rotierenden elektrischen Kontakt zwischen dem Stator und dem Rotor.

Aus der WO 2011/054901 ist eine Zentrifuge bekannt, welche einen ein RFID-Chip in der Antriebswelle im oberen Bereich aufweist, so dass er eine zentrale Position auf der Antriebswelle einnimmt. Dieser RFID-Chip ist ein Mittel zur Speicherung von Daten, die sich auf die Betriebsgeschichte des auf die Antriebswelle aufgebrachten Rotors beziehen. Der Deckel der Zentrifuge weist Mittel zum Senden/Empfangen auf, die mit dem von der Antriebswelle getragenen RFID-Chip zusammenwirken. Die Sende-/Empfangsmittel bilden Mittel zum Lesen (für den Empfangsteil) der auf dem RFID-Chip gespeicherten Daten und Mittel zur Übertragung der auf dem RFID-Chip zu speichernden Daten. Darüber hinaus ermöglichen die Sende-/Empfangsmittel eine kontaktlose Zusammenarbeit mit dem RFID-Chip für den Datenaustausch mit diesem. Mit Hilfe eines Programms werden gespeichert:
- Daten über die maximale Anzahl von Zyklen,
- die Übersetzung von Parametern der Zentrifugalzyklen in Daten,
- die an den RFID-Chip der Antriebswelle übertragenen und auf diesem gespeicherten Daten.
Zudem wird der Empfang der auf dem RFID-Chip gespeicherten Daten, die Verarbeitung dieser Daten und der Vergleich mit den Daten über die maximale Anzahl von Zyklen für einen bestimmten Rotor ermöglicht, um die Einleitung eines Zentrifugen-Zyklus zu verhindern, wenn die auf dem RFID-Chip gespeicherten Daten über die Betriebshistorie anzeigen, dass diese maximale Anzahl erreicht ist.

Eine Signalübertragung vom Rotor ist auch aus der WO 96/01687 A1 und eine Datenübertragung vom Rotor ist aus der EP 0 431 645 B1 bekannt.

Der Erfindung liegt die Aufgabe zugrunde, eine Zentrifuge gemäß der im Oberbegriff des Anspruches 1 angegebenen Art derart weiterzubilden, dass ein sicher funktionierendes Übertragen von Daten zwischen der ersten und zweiten Sende-Empfangseinheit unabhängig vom Rotortyp ermöglicht wird. Dies soll vor allem bei Einsatz verschiedener Rotoren in einer Zentrifuge gewährleistet sein. Insbesondere soll dabei die Baugröße und Bauform der Rotoren gegenüber der bisherigen Ausgestaltung nicht verändert werden.

Diese Aufgabe wird durch eine Zentrifuge mit den kennzeichnenden Merkmalen des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch eine konzentrische, sich in Richtung Drehachse überlappende Anordnung der Sende-Empfangs-Antennen sich die konstruktiven Möglichkeiten für die Optimierung der Datenübertragung erweitern und verbessern.

Nach der Erfindung weist der Träger der einen Sende-Empfangseinheit einen geringeren Durchmesser auf als der Träger der anderen Sende-Empfangseinheit. Die Sende-Empfangs-Antennen überlappen sich dabei in Richtung parallel zur Drehachse bereichsweise. Hierdurch können die Sende-Empfangs-Antennen unabhängig von der Gestaltung und Dimensionierung der verschiedenen Rotortypen auf einfache Weise immer gleich zueinander angeordnet werden. Die Qualität der Datenübertragung ist nun nicht mehr vom Rotortyp oder Rotorgestaltung auf der zum Antriebsmotor weisenden Seite abhängig, beispielsweise in welchem Abstand die Unterseite zu der Oberseite des Antriebsmotors angeordnet ist. Zudem können durch die neue Anordnung auch Toleranzen einfach ausgeglichen werden.

Vorzugsweise überlappen sich die Sende-Empfangs-Antennen zumindest 50%, vorzugsweise 70%, insbesondere 90%, vorzugsweise 95%, besonders bevorzugt 100%. Hierdurch wird die Qualität der Datenübertragung zwischen den Sende-Empfangseinheiten weiter verbessert und die Sende- und Empfangsleistung der Sende-Empfangseinheiten kann reduziert werden. Zudem haben Fertigungstoleranzen, insbesondere in axialer Richtung, kaum noch Einfluss auf die Qualität der Datenübertragung.

Gemäß einer Ausführungsform der Erfindung weist der erste Träger für die erste Sende-Empfangseinheit Magnete als Kennung für den Rotor auf. Zudem ist der zweite Träger für die zweite Sende-Empfangseinheit zumindest mit einem Hall-Sensor zur Ermittlung der durch die Magnete festgelegten Rotorkennung des ersten Trägers versehen. Eine redundante Übertragung von Daten, beispielsweise der Rotorkennung, ist dadurch möglich.

Die Sende-Empfangseinheiten weisen temperaturempfindliche Halbleiter mit sicherheitskritischen Funktionen auf, die insbesondere bei Überschreiten der zulässigen Temperatur beim Autoklavieren des Rotors stark beansprucht und beschädigt bzw. zumindest in der Funktion beeinträchtigt werden können. Zudem sind diese Teile auch hohen Zentrifugalbeschleunigungen ausgesetzt. Auftretende Fehlfunktionen der bekannten Sende-Empfangseinheiten führen daher zur Überbeanspruchung des Rotors mit den sich daraus ergebenden Konsequenzen. Aus diesem Grund wird die Drehzahl mittels der bewährten sogenannten Tachocodierung aus Magneten zusätzlich überwacht.

Um eine einfache Montage zu gewährleisten, ist der Träger streifenförmig ausgebildet und wird in die Nut eines Trägerteils eingelegt und in einer Vergussmasse fixiert.

Dabei kann der ringförmige Träger jeweils ein flexibles, streifenförmiges Leiterplattenmaterial umfassen, auf dem die Sende-Empfangseinheit und die Sende-Empfangs-Antenne aufgebracht sind. Die Sende-Empfangseinheit ist vorzugsweise in den Träger eingegossen. Derartige flexible Leiterplattenmaterialien eignen sich besonders zum Aufbringen elektronischer Bauelemente sowie diese verbindenden Leitungen.

Vorzugsweise umfasst das flexible Leiterplattenmaterial Polyimid.

Alternativ zu einer flexiblen Leiterplatte können die Antenne und die zugehörigen elektrischen Bauelemente mit Leiterbahnen direkt auf ein Kunststoffträgerbauteil nach dem MID (Molded Interconnect Device)-Verfahren aufgebracht werden.

Eine weitere vorteilhafte Ausführung ist, die Leiterplatten direkt durch Umspritzen in ein Kunststoffspritzgussteil einzubetten, welches dann ein Schutzgehäuse bildet.

Die erste Sende-Empfangseinheit kann einen Speicher aufweisen, in dem die Daten des Rotors abgelegt sind, beispielsweise Baujahr, Seriennummer der Fertigung, maximaler Zentrifugen-Aktionsradius, maximale Drehfrequenz, Parameter für die Antriebssteuerung, Temperatur-Kompensationswerte, zulässige Unwuchtwerte, also zulässige Beschleunigungswerte, usw., insbesondere umfasst der Speicher sowohl einen Permanentspeicher als auch einen Schreib-Lese-Speicher. In dem Permanentspeicher können alle sicherheitsrelevanten Daten abgelegt sein. In dem Schreib-Lese-Speicher können Aktualisierungen über durchgeführte Rotationszyklen und die dabei vorhandenen Rotationsbedingungen abgelegt werden.

Um beispielsweise die Rotorkennungen aber auch die weiteren hinterlegten Rotordaten auf einfache Weise anzeigen zu können, ist die zweite Sende-Empfangseinheit mit einer Auswerteeinheit und/oder einer Anzeigeeinheit verbunden.

Für die Datenübertragung weisen die Sende-Empfangseinheiten jeweils eine Sende-Empfangs-Antenne auf. Die Sende-Empfangs-Antenne ist im Träger vorzugsweise so angeordnet, dass die Sende-Empfangs-Antenne den Träger im Randbereich des Trägers umfasst.

Um weitere Daten des Rotors zu erfassen, sind weitere Sensoren auf dem Rotor vorgesehen und mit der Sende-Empfangseinheit verbunden. Beispielsweise sind Temperatursensoren vorgesehen, um die Temperatur direkt am Rotor zu messen und über die Sende-Empfangseinheiten beispielsweise einer Anzeigeeinheit zuzuführen.

Auf dem Motor, mit dem die zweite Sende-Empfangseinheit fest verbunden ist und welche eine elektrische Verbindung zur Steuerung hat, können sich weitere Sensoren wie z. B. Beschleunigungssensoren zur Unwuchterfassung befinden, die ebenfalls mit der Steuerung verbunden sind. In einer vorteilhaften Ausführung werden diese Sensoren auf der Leiterplatte der zweiten Sende-Empfangseinheit mit untergebracht.

Gemäß einer Ausführungsform der Erfindung umfasst die erste Sende-Empfangseinheit einen Transponder und die zweite Sende-Empfangseinheit ein zugeordnetes Lesegerät.

Dabei können die Sende-Empfangseinheiten auf dem NFC-Standard basieren, der sich insbesondere in der störungsfreien Datenübertragung auf kurze Distanz bewährt hat.

Der Unterschied der Radien des ersten Trägers und des zweiten Trägers liegt in einem Bereich von 0,3 bis 8 mm. Ziel ist es, auf der einen Seite einen möglichst geringen Abstand zwischen den Trägern zu haben, um eine optimale Datenübertragung zu garantieren, auf der anderen Seite die Träger mit den elektrischen Baueinheiten geschützt zu lagern und vor mechanischen Beeinträchtigungen zu schützen.

Vorzugsweise ist der erste und/oder zweite Träger mit jeweils der Sende-Empfangseinheit und Sende-Empfangs-Antenne von einem Schutzgehäuse umgeben. Hierdurch können die Sende-Empfangseinheiten und die Sende-Empfangs-Antennen in dem Schutzgehäuse geschützt angeordnet werden. Die Sende-Empfangseinheiten sowie die Sende-Empfangs-Antenennen sind so vor mechanischer Beeinträchtigung geschützt.

Das Schutzgehäuse kann als eine Ringkammer ausgeführt sein, die im Schnitt U-förmig ausgebildet ist. Die U-förmige Öffnung des Schutzgehäuses für den ersten Träger kann dabei nach oben, insbesondere in Richtung parallel zur Drehachse, auf den Rotor gerichtet und auf dieser Seite mit dem Rotor verbunden sein. Bei einem Schutzgehäuse für den zweiten Träger kann die U-förmige Öffnung des Schutzgehäuses nach unten, insbesondere in Richtung parallel zur Drehachse, auf das Motorgehäuse gerichtet und auf dieser Seite mit dem Motorgehäuse verbunden sein.

Der erste und/oder zweite Träger kann mit dem Schutzgehäuse verklebt sein, um diesen am Rotor bzw. Motor fest anzuordnen. Die kompletten Schutzgehäuse werden dann beispielsweise mit Schrauben mit dem Rotor und Motor verbunden. Die Verklebung kann mit einer Vergussmasse, wie Gießharz, geschehen, die den Träger komplett umschließt und so wasserdicht einbettet. Ein Autoklavieren ist dann ohne weiteres möglich.

Nach einer Ausführungsform der Erfindung ist für eine Zentrifuge ein Satz unterschiedlicher Rotoren vorgesehen, die von dieser betrieben werden kann.

Dabei kann auch jede erste Sende-Empfangseinheit der Rotoren in gleicher Höhe relativ zur Drehachse angeordnet sein, wodurch eine gleichmäßige Übertragungsqualität gewährleistet wird.

Vorteilhaft kann es dabei sein, wenn jeder Rotor einen nach unten auf den Antriebsmotor weisenden zylindrischen Vorsprung aufweist, der konzentrisch zur Drehachse der Antriebswelle angeordnet ist. Der Abstand von einem Rotorsitz, mit welcher der Rotor auf der Antriebswelle aufsitzt, zu dem freien Ende des Vorsprungs ist dabei jeweils gleich. Hierdurch wird eine Möglichkeit geschaffen, die Sende-Empfangseinheiten in gleicher Höhe relativ zur Drehachse anzuordnen.

Gemäß einem weiteren Aspekt betrifft die Erfindung ein Verfahren zum Betreiben einer Zentrifuge wie diese eben dargelegt wurde. Dabei werden erste Daten der ersten Sende-Empfangseinheit während des Betriebs durch die zweite Sende-Empfangseinheit erfasst; vorzugsweise gleichzeitig können zweite Daten über die Magnete des ersten Trägers durch einen Sensor des zweiten Trägers erfasst werden. Anschließend werden die ersten und zweiten Daten miteinander verglichen. Bei Übereinstimmung von ersten und zweiten Daten wird der Betrieb der Zentrifuge fortgeführt.

Insbesondere, wenn keine Übereinstimmung von ersten und zweiten Daten vorliegt, wird die Zentrifuge abgeschaltet.

Zudem oder alternativ kann bei keiner Übereinstimmung von ersten und zweiten Daten ein optischer und/oder akustischer Alarm ausgelöst werden.

Gemäß einer Ausführungsform der Erfindung wird die Rotorkennung sowohl aus der ersten Sende-Empfangseinheit als auch aus den Magneten des ersten Trägers ausgelesen. Dieser ausgelesenen Rotorkennung werden entsprechende Maximalgeschwindigkeiten der Zentrifuge zugeordnet, welche beim Betrieb nicht überschritten werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht auf eine Zentrifuge nach der Erfindung von seitlich schräg oben;
- Fig. 2: eine Schnittansicht entlang einer Längsmittelachse der Zentrifuge von Fig. 1;
- Fig. 3: eine Vergrößerung des in Fig. 2 mit X gekennzeichneten Bereichs der Zentrifuge;
- Fig. 4: eine weitere Vergrößerung des in Fig. 3 mit Y gekennzeichneten Bereichs der Zentrifuge;
- Fig. 5: einen streifenförmigen Träger mit einer Antenne und einer ersten Sende-Empfangseinheit;
- Fig. 6: den zu einem Ring geschlossenen Träger von Fig. 5;
- Fig. 7a: die erste Sende-Empfangseinheit mit Schutzgehäuse in perspektivischer Darstellung von schräg oben;
- Fig. 7b: die erste Sende-Empfangseinheit von Fig. 7a in Explosionsansicht;

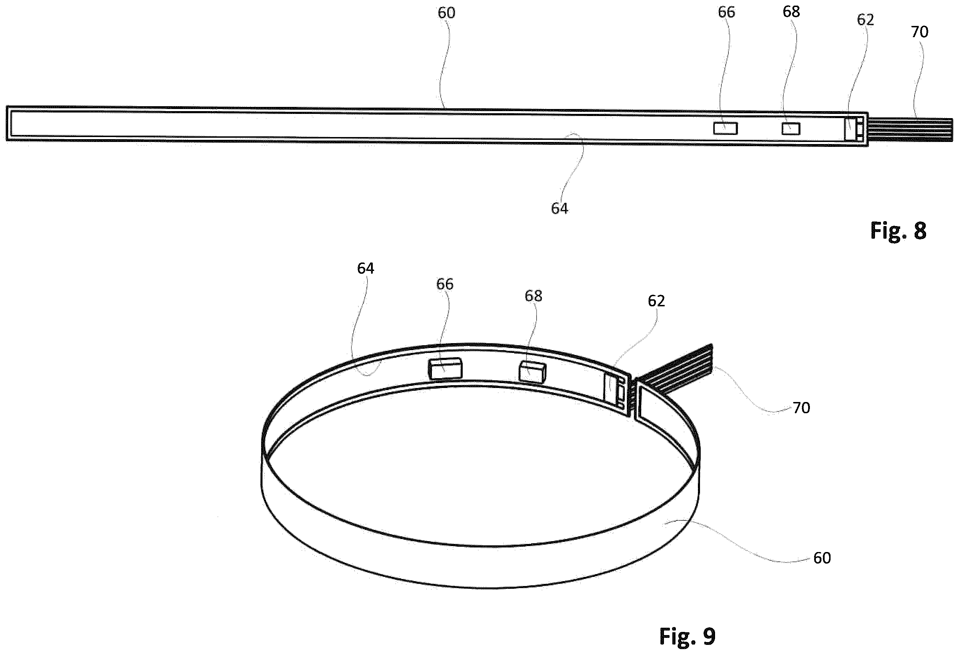

- Fig. 8: einen streifenförmigen Träger mit einer Antenne, einer zweiten Sende-Empfangseinheit mit einem Hall-Sensor und einem Beschleunigungssensor;
- Fig. 9: den zu einem Ring geschlossenen Träger von Fig. 8, und
- Fig. 10: eine Prinzip-Darstellung der Träger im Schnitt.

In den Figuren ist eine Ausführungsform einer Zentrifuge 10 nach der Erfindung dargestellt. Die Zentrifuge 10 umfasst ein Gehäuse 12 und einen das Gehäuse 12 nach oben abschließenden Deckel 14. In dem Gehäuse 12 ist ein Antriebsmotor 16 über Dämpfungsmittel 18 fest mit dem Gehäuse 12 verbunden. An dem Gehäuse 12 ist ein Schutzkessel 20 befestigt. Die Befestigungselemente sind zur Vereinfachung der Darstellung nicht dargestellt. Der Schutzkessel 20 ist konzentrisch zu einer Antriebswelle 22 angeordnet. Der Schutzkessel 20 weist zum Durchgriff eines Teilbereichs des Antriebsmotors 16 eine konzentrische kreisförmige Ausnehmung 24 auf.

Das Gehäuse 12 ist im Bereich eines Bodens 26 des Gehäuses 12 mit vier Füßen 28 versehen, welche in Eckbereichen des Bodens 26 der im Wesentlichen rechteckig gestalteten Zentrifuge 10 angeordnet sind.

Die Antriebswelle 22 des Antriebsmotors 16 ist um eine Drehachse 30 drehbar und konzentrisch zu dieser angeordnet.

Konzentrisch zur Drehachse 30 und somit auch zur Antriebswelle 22 ist ein Rotor 32 vorgesehen, der auf der Antriebswelle 22 aufsitzt. Über einen hier nicht näher dargestellten Schnellverschluss kann der Rotor 32 einfach gegen einen anderen Rotor 32 ausgetauscht werden. Die Zentrifuge 10 ist mit einem Satz Rotoren 32 betreibbar, die für unterschiedliche Anwendungsfälle zum Zentrifugieren von unterschiedlichen Proben und Probenbehältern unterschiedlich ausgebildet sind.

Jeder Rotor 32 weist mehrere aus Gründen der besseren Übersicht im Einzelnen nicht dargestellte Aufnahmen für Probenbehälter auf.

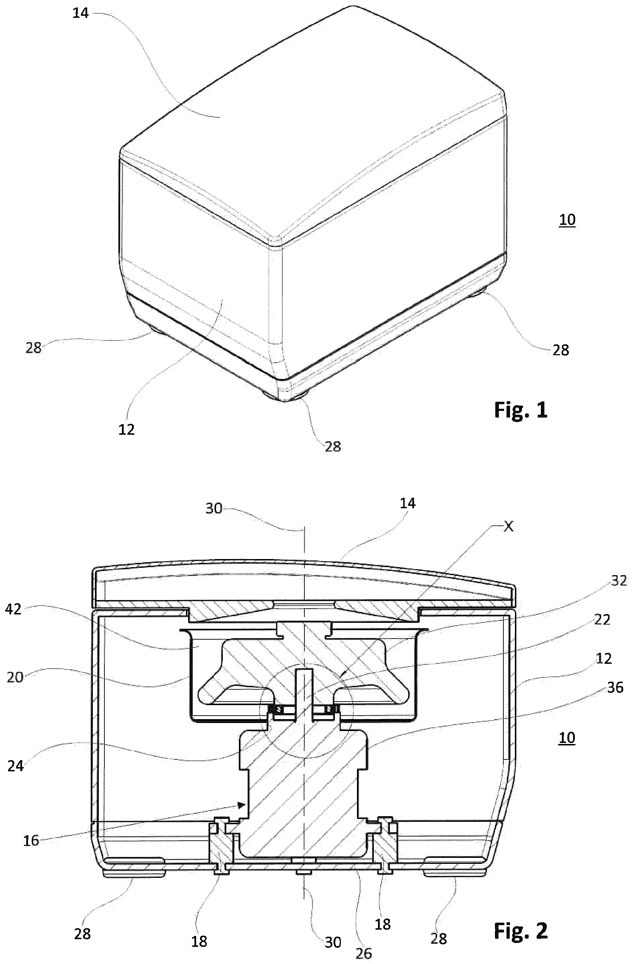

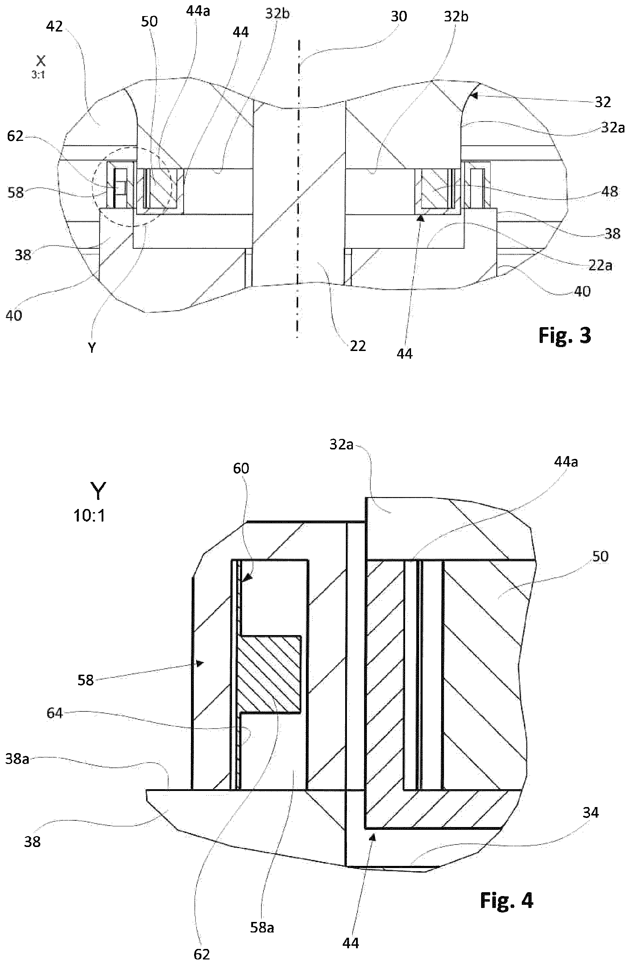

In Fig. 3 wird die gekennzeichnete Einzelheit X der Fig. 2 vergrößert dargestellt und in Fig. 4 die gekennzeichnete Einzelheit Y der Fig. 3.

Der untere Bereich des Rotors 32 weist einen zapfenförmigen, zylindrischen Vorsprung 32a auf, der die Antriebswelle 22 umfasst. Wenn der Rotor 32 auf der Antriebswelle 22 aufsitzt und fest fixiert ist, ist der zapfenförmige Vorsprung 32a in Abstand zu einem Absatz 34 auf der Oberseite des Antriebsmotors 16 angeordnet. Die Antriebswelle 22 erstreckt sich aus einem Motorgehäuse 36 des Antriebsmotors 16 über den Absatz 34 als Teil des Motorgehäuses 36 hinaus durch den zapfenförmigen Vorsprung 32a des Rotors 32 hindurch weiter in den Rotor 32 hinein. Der Absatz 34 ist Teil eines Motorgehäuses 36 des Antriebsmotors 16 und somit Teil des feststehenden Teils des Antriebsmotors 16, wohingegen die Antriebswelle 22 Teil des um die Drehachse 30 drehenden Teils des Antriebsmotors 16 ist.

Der Absatz 34 des Motorgehäuses 36 ist mit einer Ringschulter 38 versehen, welche sich vom Absatz 34 nach oben erstreckt und den Absatz 34 seitlich begrenzt. Der Absatz 34 ist Teil eines in Richtung Rotor 32 sich erstreckenden zylindrischen Vorsprungs 40 des Motorgehäuses 36. Sowohl Ringschulter 38 als auch Absatz 34 sind Teil eines zum Antriebsmotor 16 gehörigen Lagerschilds.

Der Antriebsmotor 16 ist überwiegend rotationssymmetrisch ausgebildet und konzentrisch zur Drehachse 30 angeordnet. Der Vorsprung 40 erstreckt sich durch den Schutzkessel 20 in einen von dem Schutzkessel 20 und den Deckel 14 begrenzten Rotorraum 42 hinein. Unterhalb des Schutzkessels 20 erstreckt sich das übrige Motorgehäuse 36 bis nahezu zum Boden 26 des Gehäuses 12 der Zentrifuge 10.

An die Unterseite 32b des Vorsprungs 32a des Rotors 32 schließt sich eine im Querschnitt U-förmig ausgebildete Ringkammer 44 aus Kunststoff an, welche mit ihrer U-förmigen Öffnung 44a in Richtung Unterseite 32b des Vorsprungs 32a des Rotors 32 weist, konzentrisch zur Drehachse 30 angeordnet ist und mit den Stirnseiten der Schenkel der U-förmigen Öffnung 44a mit der Unterseite 32b des Vorsprungs 32a des Rotors 32 verbunden, vorzugsweise verschraubt, ist. Hierdurch ist die Ringkammer 44 fest mit dem Rotor 32 verbunden und dreht während des Betriebs des Rotors 32 entsprechend mit. Der zylindrische Vorsprung 32a ist bei allen unterschiedlichen Rotoren 32 und somit Rotortypen gleich, insbesondere der Durchmesser und der Abstand von der Unterseite des Vorsprungs 32a zum Absatz 34 sowie der Abstand von der Unterseite des Vorsprungs 32a zum hier nicht dargestellten Sitz des Rotors 32 auf der Antriebswelle 22 sind gleich.

Die Unterseite der Ringkammer 44 weist in Richtung auf den im Wesentlichen sich horizontal erstreckenden Absatz 22a des Vorsprungs 40 des Motorgehäuses 36. Zwischen der Oberseite des Absatzes 22a und der Unterseite der Ringkammer 44 ist genügend Abstand, dass die Teile sich nicht berühren.

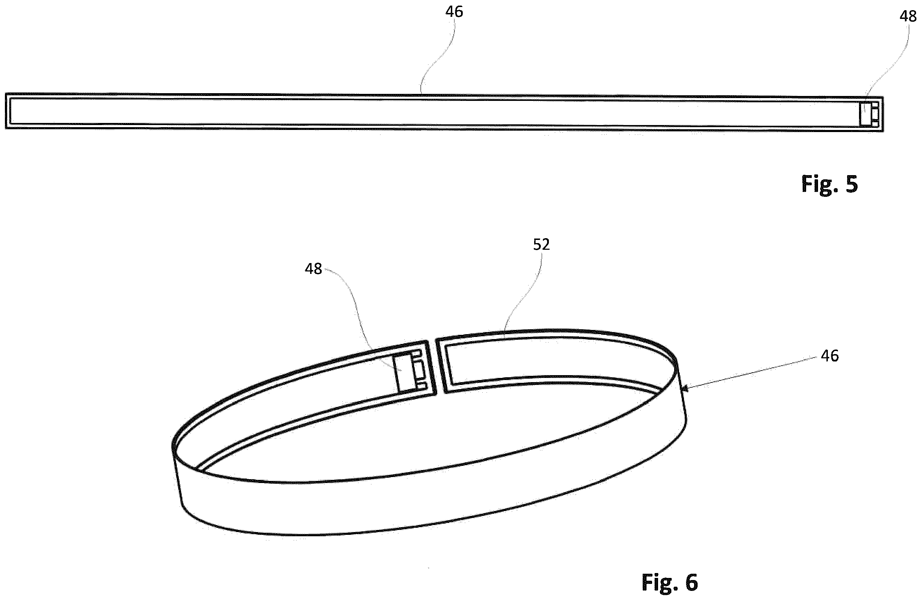

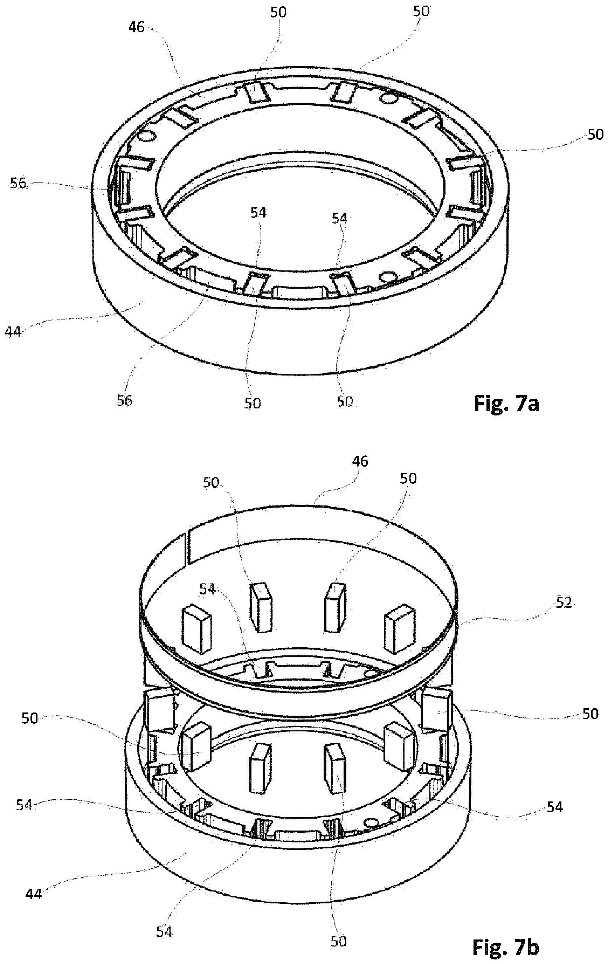

Auf der Innenseite eines im Querschnitt U-förmigen Schenkels der Ringkammer 44 ist ein streifenförmiger Träger 46 aufgeklebt. Der Träger 46 besteht aus einem flexiblen, filmförmigen Leiterplattenmaterial, nämlich Polyimid. Auf einer Seite des Trägers 46 ist eine erste Sende-Empfangseinheit 48 angeordnet sowie im Abstand hierzu mehrere Magnete 50. Die Sende-Empfangseinheit 48 ist mit einer Sende-Empfangs-Antenne 52 verbunden, welche den Träger 46 im Randbereich auf seiner Außenseite umfasst, siehe Fig. 5 und 6, aber auch Fig. 7a und 7b.

Jedem Magneten 50 ist dabei eine Aufnahme 54 zugeordnet. Zwischen dem Träger 46 und den Magneten 50 in der jeweils zugeordneten Aufnahme 54 ist ein Hohlraum 56 vorgesehen, der nach der Montage mit Vergussmasse aufgefüllt wird. Als Vergussmasse kann dabei beispielsweise Epoxidharz verwendet werden.

Der Träger 46 ist als Streifenelement ausgebildet. In Fig. 5 ist der Träger 46 flach ausgerollt und in Fig. 6 ist der Träger 46 ringförmig dargestellt, in der Form, die er einnimmt, wenn er in den Träger eingelegt ist.

Auf der Ringschulter 38 ist ebenfalls eine zweite Ringkammer 58 (Tauchring) vorgesehen, welche im Querschnitt U-förmig ausgebildet ist. Mit ihrer U-förmigen Öffnung 58a weist sie in Richtung Oberseite 38a der Ringschulter 38 des Vorsprungs 40 des Motorgehäuses 36. Die Ringschulter 38 ist konzentrisch zur Drehachse 30 angeordnet und ist mit den Stirnseiten der Schenkel der U-förmigen Öffnung 58a mit der Oberseite 38a der Ringschulter 38 des Vorsprungs 40 des Motorgehäuses 36 verbunden. Hierdurch ist die Ringkammer 58 fest mit dem Motorgehäuse 36 verbunden und auch während des Betriebs der Zentrifuge 10 ortsfest angeordnet.

Auf der Innenseite eines im Querschnitt U-förmigen Schenkels der Ringkammer 58 ist ein streifenförmiger Träger 60 aufgeklebt. Der Träger 60 besteht aus einem flexiblen, filmförmigen Leiterplattenmaterial, nämlich Polyimid. Auf einer Seite des Trägers 60 ist eine zweite Sende-Empfangseinheit 62 angeordnet sowie ein Hall-Sensor 66. Die zweite Sende-Empfangseinheit 62 ist mit einer Sende-Empfangs-Antenne 64 verbunden, welche den Träger 60 im Randbereich umfasst. Insofern ist der Träger 60 analog dem Träger 46 aufgebaut.

Der Träger 60 ist ebenfalls als Streifenelement ausgebildet und weist an seinem freien Ende eine elektrische Anschlussleitung 70 auf, die zur Steuerung führt.

Die Ringkammern 44 und 58 bilden jeweils Schutzkammern für die darin befindlichen Träger 46, 60, beispielsweise vor mechanischer Beschädigung. Insbesondere die Ringkammer 44 ist wichtig, da beim Autoklavieren die elektrischen Bauteile des Trägers 46 geschützt sind.

Die zweite Sende-Empfangseinheit 62 ist mit einer hier im Einzelnen nicht dargestellten Steuereinheit mit auswärtiger Einheit für die Zentrifuge 10 und einer daran angeschlossenen Anzeigeeinheit verbunden.

Die Ringkammer 58 ist gegenüber der Ringkammer 44 bezogen auf die Drehachse 30 radial außen angeordnet. Der Abstand der Ringkammern 44, 58 liegt dabei in einem Bereich von 0,3 bis 8 mm. Die beiden Sende-Empfangs-Antennen 52, 64 sind in Bezug auf die Drehachse 30 auf gleicher Höhe angeordnet und überlappen sich somit zu 100 %. Hierdurch wird eine optimale Datenübertragung zwischen den Sende-Empfangs-Antennen 52, 64 und somit zwischen den Sende-Empfangseinheiten 48, 62 erreicht. Teil der Datenübertragung ist auch die Rotorkennung.

Zudem sind der Hall-Sensor 66 des zweiten Trägers 60 und die Magnete 50 des ersten Trägers 46 in Bezug auf die Drehachse 30 auf gleicher Höhe angeordnet und überlappen sich somit zu 100 %. In bekannter Weise wird über die Zahl der Magnete und die Anordnung der Magnete die Rotorkennung übertragen.

Da es sich bei der Rotorkennung und den damit zusammenhängenden Daten um sicherheitsrelevante Daten handelt, werden diese durch diese Ausführungsform redundant von dem rotorseitigen Träger 46 auf den gehäuseseitigen Träger 60 zu einer Steuereinrichtung der Zentrifuge 10 übertragen, also auf der einen Seite durch die Magnete 50, welche von dem Hall-Sensor 66 erfasst werden, aber auch durch die Sende-Empfangseinheiten 48 und 62.

Zudem werden die Betriebsdaten, wie Laufzyklen, Laufzeiten usw. sowohl für die Rotorkennung in einem Speicher der Steuereinrichtung der Zentrifuge 10 hinterlegt als auch in einem Speicher der Sende-Empfangseinheit 48.

Hierfür umfasst die erste Sende-Empfangseinheit einen Speicher, in dem die Daten des Rotors abgelegt sind, beispielsweise Rotortyp, maximal zulässige Drehzahl, maximal zulässige Laufzeit des Rotors und Ähnliches. Diese Daten sind in einem Permanent-Speicher abgelegt. Zudem ist ein Schreib-Lese-Speicher vorgesehen, in dem fortlaufend die Betriebsdaten, wie Laufzeitzyklen, Betriebsdauer, gefahrene Geschwindigkeiten und Ähnliches, aktualisiert werden.

Weiterhin ist auf dem zweiten Träger 60 ein Beschleunigungssensor 68 vorgesehen. Über den Beschleunigungssensor 68 werden mögliche Unwuchten erfasst und die Steuereinrichtung kann gegebenenfalls darauf reagieren, wenn beispielsweise vorgegebene Schwellwerte überschritten werden.

Die erste Sende-Empfangseinheit 48 kann einen Transponder umfassen und die zweite Sende-Empfangseinheit 62 ein zugeordnetes Lesegerät.

Die Sende-Empfangseinheiten 48, 62 sind für den NFC-Standard ausgelegt.

Während des Betriebs der Zentrifuge 10 wird vor dem Start der Zentrifugation die Rotorkennung aus der ersten Sende-Empfangseinheit ausgelesen und spätestens im Anlauf die Rotorerkennung zusätzlich über die Magnete 50 erfasst. Die Daten werden dabei miteinander verglichen. Stimmen die Daten oder Kennung überein, wird der Betrieb der Zentrifuge 10 aufgrund der der Rotorkennung zugeordneten Betriebsdaten, maximal zulässige Geschwindigkeit, maximale Lebensdauer, maximaler Lastwechsel usw., fortgeführt.

Liegt keine Übereinstimmung bei der Rotorkennung vor, wird die Zentrifuge abgeschaltet und ein optischer und akustischer Alarm ausgelöst.

Werden über den Beschleunigungssensor 68 Daten erfasst, welche über einen vorbestimmten Schwellwert hinausgehen, wird die Zentrifuge 10 ebenfalls abgeschaltet sowie ein optischer, wie eine Fehlermeldung auf einem Display, und ein akustischer Alarm ausgelöst.

Die Erfindung zeichnet sich dadurch aus, dass ein minimaler Abstand zwischen den Sende-Empfangs-Antennen 52, 64 geschaffen werden kann, bei dem sich Toleranzen kaum auswirken. Durch die überlappende Anordnung der Sende-Empfangs-Antennen 52, 64 ist die Datenübertragung unempfindlich gegen mögliche Toleranzen in axialer Richtung, also der Position des Rotors 32 relativ zum Antriebsmotor 16. Zudem kann durch die koaxiale gegenüberliegende Anordnung der Träger 46, 60 auf dem einen möglichst geringen Radius aufweisenden zylindrischen Vorsprung 32a des Rotors 32 bzw. auf dem einen möglichst geringen Radius aufweisenden Vorsprung 40 des Motorgehäuses 36 die auf die Sende-Empfangseinheit 48 einwirkende Zentripetalkraft minimiert werden.

Weiterhin zeichnet sich die Erfindung dadurch aus, dass sich direkt hinter den Trägern kein Metall befindet, das den Aufbau eines Magnetfeldes verhindert.

Durch den NFC-Standard wird eine kostengünstige und sichere Möglichkeit der Datenübertragung geschaffen. Die Redundanz in der Übertragung der Motorkennung erhöht die Sicherheit der Zentrifuge 10 während des Betriebs erheblich. Zu hohe Maximalgeschwindigkeiten werden auf einfache Weise sicher vermieden.

Durch die Anordnung des ringförmigen Trägers 46 auf der gleichen Höhe der unterschiedlichen Rotoren 32 ist die Datenübertragungsqualität bei allen Rotoren 32 gleich.

Durch die erfindungsgemäße Anordnung der Träger 46 und 60 in Richtung der Drehachse 30 wird die Datenübertragung optimiert, da der Rotor 32, welcher in der Regel aus Metall besteht, und der Antriebsmotor 16, welcher ebenfalls aus Metall besteht, die Feldlinien der Sende-Empfangseinheiten 48, 62 nicht beeinträchtigen. Dies wird schematisch in Fig. 10 dargestellt, wobei die Feldlinien mit dem Bezugszeichen 72 versehen sind. Durch die Anordnung ist somit kein Metall in unmittelbarer Nähe zu den Trägern 46, 60 angeordnet und das Magnetfeld bzw. das elektromagnetische Feld kann sich ohne weiteres und ungestört aufbauen.

### Bezugszeichenliste

- 10: Zentrifuge
- 12: Gehäuse
- 14: Deckel
- 16: Antriebsmotor
- 18: Dämpfungsmittel
- 20: Schutzkessel
- 22: Antriebswelle
- 22a: Absatz des Vorsprungs 40 des Motorgehäuses 36
- 24: konzentrische, kreisförmige Ausnehmung des Schutzkessels 20
- 26: Boden des Gehäuses 12
- 28: Füße des Gehäuses 12
- 30: Drehachse
- 32: Rotor
- 32a: Vorsprung des Rotors 32
- 32b: Unterseite des Vorsprungs 32a des Rotors 32
- 34: Absatz des Antriebsmotors 16
- 36: Motorgehäuse
- 38: Ringschulter
- 38a: Oberseite der Ringschulter
- 40: Vorsprung des Motorgehäuses 36
- 42: Rotorraum
- 44: erste Ringkammer - rotorseitig
- 44a: U-förmige Öffnung der Ringkammer
- 46: erster Träger
- 48: erste Sende-Empfangseinheit
- 50: Magnet
- 52: Sende-Empfangs-Antenne der ersten Sende-Empfangseinheit 48
- 54: Aufnahme für Magnete 50 in der ersten Ringkammer 44
- 56: Hohlraum in der ersten Ringkammer 44
- 58: zweite Ringkammer - gehäuseseitig
- 58a: U-förmige Öffnung der Ringkammer 58
- 60: zweiter Träger
- 62: zweite Sende-Empfangseinheit
- 64: Sende-Empfangs-Antenne der zweiten Sende-Empfangseinheit 62
- 66: Hall-Sensor
- 68: Beschleunigungssensor
- 70: Anschlussleitung
- 72: Feldlinien

## Patentansprüche

1. Zentrifuge (10) mit einem Gehäuse (12), in dem ein Rotor (32) zur Aufnahme einer zu zentrifugierenden Probe angeordnet ist, wobei der Rotor (32) auf einer Antriebswelle lösbar aufsitzt, welche mit einem Antrieb verbunden ist, der Rotor (32) während des Betriebs der Zentrifuge (10) von der Antriebswelle (22) angetrieben wird und um eine Drehachse (30) dreht, der Rotor (32) eine erste, rotorseitige Sende-Empfangseinheit aufweist, welche über ein elektrisches Feld angeregt wird, wodurch Spannung in der ersten Sende-Empfangseinheit (48) induziert wird, die erste Sende-Empfangseinheit (48) einer zweiten, gehäuseseitigen Sende-Empfangseinheit (62) zugeordnet ist, welche mit einer Spannungsquelle verbunden ist, wobei beide Sende-Empfangseinheiten (48, 62) jeweils mit einer Sende-Empfangs-Antenne (52, 64) verbunden sind und die Sende-Empfangseinheiten (48, 62) und die Sende-Empfangs-Antenne (52, 64) jeweils auf einem ringförmigen Träger (46, 60) konzentrisch zur Drehachse (30) angeordnet sind, **dadurch gekennzeichnet, dass** der Träger (46) der einen Sende-Empfangseinheit (48) einen geringeren Durchmesser aufweist als der Träger (60) der anderen Sende-Empfangseinheit (62) und die Sende-Empfangs-Antenne (52) der einen Sende-Empfangseinheit (48) sich mit der Sende-Empfangs-Antenne (64) der anderen Sende-Empfangseinheit (62) sich in Richtung parallel zur Drehachse (30) bereichsweise überlappt.

2. Zentrifuge nach Anspruch 1, **dadurch gekennzeichnet, dass** die Grundfläche eines oder beider Träger nicht auf Metall aufliegt.

3. Zentrifuge nach Anspruch 1 oder 2, **dadurch gekennzeichnet, dass** die Sende-Empfangs-Antennen (52, 64) sich in Richtung parallel zur Drehachse (30) 50% überlappen, vorzugsweise 70%, insbesondere 90%, vorzugsweise 95%, besonders bevorzugt 100%.

4. Zentrifuge nach einem der vorangehenden Ansprüche, **dadurch gekennzeichnet, dass** der Rotor (32) sowohl einen ersten Träger (46) für die erste Sende-Empfangseinheit (48) als auch Magnete (50) als Kennung für den Rotor (32) aufweist, insbesondere dass der zweite Träger (60) für die zweite Sende-Empfangseinheit (62) zumindest einen Hall-Sensor (66) zur Ermittlung der durch die Magnete (50) festgelegten Rotorkennung des ersten Trägers (46) aufweist.

5. Zentrifuge nach einem der vorangehenden Ansprüche, **dadurch gekennzeichnet, dass** der Träger (46, 60) streifenförmig ausgebildet ist.

6. Zentrifuge nach einem der vorangehenden Ansprüche, **dadurch gekennzeichnet, dass** der ringförmige Träger (46, 60) jeweils ein flexibles, streifenförmiges Leiterplattenmaterial umfasst, auf dem die Sende-Empfangseinheit (48, 62) und die Sende-Empfangs-Antenne (52, 64) aufgebracht sind, insbesondere das flexible Leiterplattenmaterial Polyimid umfasst.

7. Zentrifuge nach einem der vorangehenden Ansprüche, **dadurch gekennzeichnet, dass** die erste Sende-Empfangseinheit (48) einen Speicher aufweist, in dem die Daten des Rotors (32) abgelegt sind, beispielsweise Art des Rotors, maximale Drehzahl des Rotors, maximale Laufzeit des Rotors, insbesondere umfasst der Speicher sowohl einen Permanentspeicher als auch einen Schreib-Lese-Speicher.

8. Zentrifuge nach einem der vorangehenden Ansprüche, **dadurch gekennzeichnet, dass** die zweite Sende-Empfangseinheit (62) mit einer Auswerteeinheit und/oder einer Anzeigeeinheit verbunden ist.

9. Zentrifuge nach einem der vorangehenden Ansprüche, **dadurch gekennzeichnet, dass** die Sende-Empfangs-Antenne (52, 64) jeweils im Wesentlichen den ringförmigen Träger (46, 60) im Randbereich umfasst.

10. Zentrifuge nach einem der vorangehenden Ansprüche, **dadurch gekennzeichnet, dass** mit dem ersten Träger (46) weitere Daten von auf dem Rotor (32) befindlichen Sensoren übertragen werden.

11. Zentrifuge nach einem der vorangehenden Ansprüche, **dadurch gekennzeichnet, dass** die erste Sende-Empfangseinheit (48) einen Transponder umfasst und die zweite Sende-Empfangseinheit (62) ein zugeordnetes Lesegerät umfasst, vorzugsweise die Sende-Empfangseinheiten (48, 62) auf dem NFC-Standard basieren.

12. Zentrifuge nach einem der vorangehenden Ansprüche, **dadurch gekennzeichnet, dass** der Unterschied der Radien des ersten Trägers (46) und des zweiten Trägers (60) in einem Bereich von 0,3 bis 8mm liegt.

13. Zentrifuge nach einem der vorangehenden Ansprüche, **dadurch gekennzeichnet, dass** der Träger (46) der ersten und/oder der Träger (60) der zweiten Sende-Empfangseinheit (48, 62) mit Sende-Empfangs-Antenne (52, 64) von einem Schutzgehäuse umgeben ist, insbesondere das Schutzgehäuse (12) als eine Ringkammer (44) ausgebildet ist, die im Schnitt U-förmig (44a) ausgebildet ist, wobei vorzugsweise die U-förmige Öffnung des Schutzgehäuses (12) für den ersten Träger (46) nach oben, insbesondere in Richtung parallel zur Drehachse (30), auf den Rotor (32) gerichtet und auf dieser Seite mit dem Rotor (32) verbunden ist.

14. Zentrifuge nach Anspruch 13, **dadurch gekennzeichnet, dass** die U-förmige Öffnung des Schutzgehäuses (12) für den zweiten Träger (60) nach unten, insbesondere in Richtung parallel zur Drehachse (30), auf das Motorgehäuse (36) gerichtet und auf dieser Seite mit dem Motorgehäuse (36) verbunden ist.

15. Zentrifuge nach einem der Ansprüche 13 oder 14, **dadurch gekennzeichnet, dass** der Träger (46, 60) mit dem Schutzgehäuse (12) verklebt ist.

16. Zentrifuge nach einem der vorangehenden Ansprüche, **dadurch gekennzeichnet, dass** ein Satz unterschiedlicher Rotoren (32) vorgesehen ist, insbesondere jede erste Sende-Empfangs-Antenne (52) der Rotoren (32) in gleicher Höhe relativ zur Drehachse (30) angeordnet ist.

17. Zentrifuge nach Anspruch 15 oder 16, **dadurch gekennzeichnet, dass** jeder Rotor (32) einen nach unten auf den Antriebsmotor weisenden zylindrischen Vorsprung (32a) aufweist, der konzentrisch zur Drehachse (30) der Antriebswelle (22) angeordnet ist, wobei der Abstand von einem Rotorsitz, mit welchem der Rotor (32) auf der Antriebswelle (22) aufsitzt, zu dem freien Ende des Vorsprungs (32a) jeweils gleich ist.

18. Verfahren zum Betreiben einer Zentrifuge (10) nach Anspruch 4, insbesondere und einem weiteren der vorangegangenen Ansprüche, **dadurch gekennzeichnet, dass** erste Daten der ersten Sende-Empfangseinheit (48) während des Betriebs durch die zweite Sende-Empfangseinheit (62) ausgelesen werden,
zweite Daten über die Magnete (50) des ersten Trägers (46) durch einen Sensor des zweiten Trägers (60) erfasst werden,
die ersten und zweiten Daten miteinander verglichen werden,
bei Übereinstimmung von ersten und zweiten Daten der Betrieb der Zentrifuge (10) fortgeführt wird.

19. Verfahren nach Anspruch 18, **dadurch gekennzeichnet, dass** bei keiner Übereinstimmung von ersten und zweiten Daten die Zentrifuge (10) abgeschaltet wird.

20. Verfahren nach Anspruch 18 oder 19, **dadurch gekennzeichnet, dass** bei keiner Übereinstimmung von ersten und zweiten Daten ein optischer und/oder akustischer Alarm ausgelöst wird.

21. Verfahren nach einem der Ansprüche 18 bis 20, **dadurch gekennzeichnet, dass** eine Rotorkennung sowohl aus der ersten Sende-Empfangseinheit (48) als auch aus den Magneten (50) des ersten Trägers (46) ausgelesen wird, dieser ausgelesenen Rotorkennung entsprechende Maximalgeschwindigkeiten der Zentrifuge (10) zugeordnet werden, welche beim Betrieb nicht überschritten werden.

22. Verfahren nach einem der Ansprüche 18 bis 21, **dadurch gekennzeichnet, dass** bei Überschreiten eines vorbestimmten Schwellwertes im Hinblick auf die von einem Beschleunigungssensor (68) gelieferten Daten die Zentrifuge (10) abschaltet.

## Claims

1. Centrifuge (10) with a housing (12) in which a rotor (32) is arranged for receiving a sample to be centrifuged, which rotor (32) is detachably mounted on a drive shaft that is connected to a drive, which rotor (32) is driven by said drive shaft (22) during operation of said centrifuge (10) and rotates about a rotational axis (30), which rotor (32) has a first, rotor-side transceiver unit which is excited by an electric field, thus inducing voltage in said first transceiver unit (48), which first transceiver unit (48) is associated with a second, housing-side transceiver unit (62) which is connected to a voltage source, which two transceiver units (48, 62) are connected to a transceiver antenna (52, 64) each, and said transceiver units (48, 62) and said transceiver antenna (52, 64) are each arranged on an annular support (46, 60) in a manner concentric to said rotational axis (30), **characterized in that** said support (46) of said one transceiver unit (48) is smaller in diameter than said support (60) of said other transceiver unit (62), and said transceiver antenna (52) of said one transceiver unit (48) overlaps in part with said transceiver antenna (64) of said other transceiver unit (62) in a direction parallel to said rotational axis (30).

2. Centrifuge as claimed in claim 1, **characterized in that** the base of one or both supports does not rest on metal.

3. Centrifuge as claimed in one of claims 1 and 2, **characterized in that** said transceiver antennas (52, 64) overlap in a direction parallel to said rotational axis (30) by 50 %, preferably by 70 %, in particular by 90 %, preferably by 95 %, more preferably by 100 %.

4. Centrifuge as claimed in any one of the preceding claims, **characterized in that** said rotor (32) comprises both a first support (46) for said first transceiver unit (48) and magnets (50) as identification for said rotor (32), in particular that said second support (60) for said second transceiver unit (62) includes at least one Hall sensor (66) for detecting the rotor identification of said first support (46) as defined by said magnets (50).

5. Centrifuge as claimed in any one of the preceding claims, **characterized in that** said support (46, 60) is strip-shaped.

6. Centrifuge as claimed in any one of the preceding claims, **characterized in that** said annular support (46, 60) comprises a respective flexible strip-shaped printed circuit board material on which said transceiver unit (48, 62) and said transceiver antenna (52, 64) are mounted, which printed circuit board material in particular comprises polyimide.

7. Centrifuge as claimed in any one of the preceding claims, **characterized in that** said first transceiver unit (48) has a memory which stores the data of said rotor (32), for example rotor type, maximum rotor speed, maximum rotor running time, which memory in particular comprises a non-volatile memory as well as a read-write memory.

8. Centrifuge as claimed in any one of the preceding claims, **characterized in that** said second transceiver unit (62) is connected to an evaluation unit and/or to a display unit.

9. Centrifuge as claimed in any one of the preceding claims, **characterized in that** each said transceiver antenna (52, 64) substantially comprises said annular support (46, 60) in its edge area.

10. Centrifuge as claimed in any one of the preceding claims, **characterized in that** said first support (46) is used for transmitting additional data from sensors located on said rotor (32).

11. Centrifuge as claimed in any one of the preceding claims, **characterized in that** said first transceiver unit (48) comprises a transponder, and said second transceiver unit (62) comprises an associated reader, with said transceiver units (48, 62) being preferably based on the NFC standard.

12. Centrifuge as claimed in any one of the preceding claims, **characterized in that** the difference in the radii each of said first support (46) and said second support (60) is in a range of between 0.3 mm and 8 mm.

13. Centrifuge as claimed in any one of the preceding claims, **characterized in that** said support (46) of said first transceiver unit (48, 62) and/or said support (60) of said second transceiver unit (48, 62) with said transceiver antenna (52, 64) is surrounded by a protective housing, which protective housing (12) is in particular designed as an annular chamber (44) which is U-shaped (44a) in section, which U-shaped opening of said protective housing (12) for said first support (46) is preferably directed upwards, in particular in a direction parallel to the rotational axis (30), towards said rotor (32) and is connected to said rotor (32) on this side.

14. Centrifuge as claimed in claim 13, **characterized in that** said U-shaped opening of said protective housing (12) for said second support (60) is directed downwards, in particular in a direction parallel to the rotational axis (30), towards said motor housing (36) and is connected to said motor housing (36) on this side.

15. Centrifuge as claimed in one of claims 13 and 14, **characterized in that** said support (46, 60) is glued to said protective housing (12).

16. Centrifuge as claimed in any one of the preceding claims, **characterized in that** a set of different rotors (32) is provided, in particular that each first transceiver antenna (52) of said rotors (32) is arranged at the same level relative to said rotational axis (30).

17. Centrifuge as claimed in one of claims 15 and 16, **characterized in that** each rotor (32) has a cylindrical projection (32a) which faces downward towards the drive motor and is arranged concentrically to said rotational axis (30) of said drive shaft (22), with the distance from a rotor seat, via which the rotor (32) is mounted on said drive shaft (22), to the free end of said projection being the same in each case.

18. Method for operating a centrifuge (10) as claimed in claim 4 in particular, and as claimed in any other one of the preceding claims, **characterized in that**
first data of said first transceiver unit (48) is read out by said second transceiver unit (62) during operation,
second data about said magnets (50) of said first support (46) is acquired by a sensor of said second support (60),
said first and second data are then compared,
if first and second data match, operation of said centrifuge (10) continues.

19. Method as claimed in claim 18, **characterized in that** if first and second data do not match, said centrifuge (10) is switched off.

20. Method as claimed in one of claims 18 and 19, **characterized in that** if first and second data do not match, a visual and/or acoustic alarm is triggered.

21. Method as claimed in any one of claims 18 to 20, **characterized in that** a rotor identification is read out both from said first transceiver unit (48) and from said magnets (50) of said first support (46), which read-out rotor identification is assigned corresponding maximum speeds of said centrifuge (10) which are not exceeded during operation.

22. Method as claimed in any one of claims 18 to 21, **characterized in that,** when a predetermined threshold value is exceeded with respect to the data provided by an acceleration sensor (68), said centrifuge (10) switches off.

## Revendications

1. Centrifugeuse (10) avec un carter (12), dans lequel est disposé un rotor (32) pour la réception d'un échantillon à centrifuger, dans laquelle le rotor (32) repose de manière détachable sur un arbre d'entraînement, lequel est relié à un entraînement, le rotor (32) est entraîné pendant le fonctionnement de la centrifugeuse (10) par l'arbre d'entraînement (22) et tourne autour d'un axe de rotation (30), le rotor (32) présente une première unité émettrice-réceptrice côté rotor, laquelle est excitée par l'intermédiaire d'un champ électrique, ce qui a pour effet que la tension dans la première unité émettrice-réceptrice (48) est induite, la première unité émettrice-réceptrice (48) est associée à une deuxième unité émettrice-réceptrice (62) côté carter, laquelle est reliée à une source de tension, dans laquelle les deux unités émettrices-réceptrices (48, 62) sont reliées respectivement à une antenne émettrice-réceptrice (52, 64) et les unités émettrices-réceptrices (48, 62) et l'antenne émettrice-réceptrice (52, 64) sont disposées respectivement sur un support annulaire (46, 60) de manière concentrique par rapport à l'axe de rotation (30), **caractérisée en ce que** le support (46) de la une unité émettrice-réceptrice (48) présente un diamètre plus petit que le support (60) de l'autre unité émettrice-réceptrice (62) et l'antenne émettrice-réceptrice (52) de la une unité émettrice-réceptrice (48) chevauche par endroits l'antenne émettrice-réceptrice (64) de l'autre unité émettrice-réceptrice (62) dans une direction parallèle à l'axe de rotation (30).

2. Centrifugeuse selon la revendication 1, **caractérisée en ce que** la surface de base d'un ou des deux supports n'est pas en appui sur du métal.

3. Centrifugeuse selon la revendication 1 ou 2, **caractérisée en ce que** les antennes émettrices-réceptrices (52, 64) se chevauchent dans une direction parallèle à l'axe de rotation (30) de 50 %, de préférence de 70 %, en particulier de 90 %, de préférence de 95 %, de manière particulièrement préférée de 100 %.

4. Centrifugeuse selon l'une quelconque des revendications précédentes, **caractérisée en ce que** le rotor (32) présente aussi bien un premier support (46) pour la première unité émettrice-réceptrice (48) que des aimants (50) comme identifiant pour le rotor (32), en particulier que le deuxième support (60) pour la deuxième unité émettrice-réceptrice (62) présente au moins un capteur à effet Hall (66) pour la détermination de l'identifiant de rotor du premier support (46) établie par les aimants (50).

5. Centrifugeuse selon l'une quelconque des revendications précédentes, **caractérisée en ce que** le support (46, 60) est réalisé en forme de bande.

6. Centrifugeuse selon l'une quelconque des revendications précédentes, **caractérisée en ce que** le support annulaire (46, 60) comprend respectivement un matériau de carte de circuits imprimés en forme de bande flexible, sur lequel l'unité émettrice-réceptrice (48, 62) et l'antenne émettrice-réceptrice (52, 64) sont appliquées, en particulier le matériau de carte de circuits imprimés flexible comprend du polyimide.

7. Centrifugeuse selon l'une quelconque des revendications précédentes, **caractérisée en ce que** la première unité émettrice-réceptrice (48) présente une mémoire, dans laquelle les données du rotor (32) sont déposées, par exemple le type du rotor, la vitesse de rotation maximale du rotor, le temps de fonctionnement maximal du rotor, en particulier la mémoire comprend aussi bien une mémoire permanente qu'une mémoire vive.

8. Centrifugeuse selon l'une quelconque des revendications précédentes, **caractérisée en ce que** la deuxième unité émettrice-réceptrice (62) est reliée à une unité d'évaluation et/ou une unité d'affichage.

9. Centrifugeuse selon l'une quelconque des revendications précédentes, **caractérisée en ce que** l'antenne émettrice-réceptrice (52, 64) comprend respectivement sensiblement le support annulaire (46, 60) dans la zone de bord.

10. Centrifugeuse selon l'une quelconque des revendications précédentes, **caractérisée en ce que** d'autres données de capteurs se trouvant sur le rotor (32) sont transmises avec le premier support (46).

11. Centrifugeuse selon l'une quelconque des revendications précédentes, **caractérisée en ce que** la première unité émettrice-réceptrice (48) comprend un transpondeur et la deuxième unité émettrice-réceptrice (62) comprend un lecteur associé, de préférence les unités émettrices-réceptrices (48, 62) se basent sur la norme NFC.

12. Centrifugeuse selon l'une quelconque des revendications précédentes, **caractérisée en ce que** la différence entre les rayons du premier support (46) et du deuxième support (60) se situe dans une plage de 0,3 à 8 mm.

13. Centrifugeuse selon l'une quelconque des revendications précédentes, **caractérisée en ce que** le support (46) de la première et/ou le support (60) de la deuxième unité émettrice-réceptrice (48, 62) avec l'antenne émettrice-réceptrice (52, 64) est entouré par un carter de protection, en particulier le carter de protection (12) est réalisé sous la forme d'une chambre annulaire (44), qui est réalisée en coupe en forme de U (44a), dans laquelle de préférence l'ouverture en forme de U du carter de protection (12) pour le premier support (46) est dirigée vers le haut, en particulier dans une direction parallèle à l'axe de rotation (30), sur le rotor (32) et reliée au rotor (32) sur cette face.

14. Centrifugeuse selon la revendication 13, **caractérisée en ce que** l'ouverture en forme de U du carter de protection (12) pour le deuxième support (60) est dirigée vers le bas, en particulier dans une direction parallèle à l'axe de rotation (30), sur le carter de moteur (36) et reliée au carter de moteur (36) sur cette face.

15. Centrifugeuse selon l'une quelconque des revendications 13 ou 14, **caractérisée en ce que** le support (46, 60) est collé au carter de protection (12).

16. Centrifugeuse selon l'une quelconque des revendications précédentes, **caractérisée en ce qu'un** ensemble de différents rotors (32) est prévu, en particulier chaque première antenne émettrice-réceptrice (52) des rotors (32) est disposée à la même hauteur par rapport à l'axe de rotation (30).

17. Centrifugeuse selon la revendication 15 ou 16, **caractérisée en ce que** chaque rotor (32) présente une partie saillante cylindrique (32a) tournée vers le bas sur le moteur d'entraînement, qui est disposée de manière concentrique par rapport à l'axe de rotation (30) de l'arbre d'entraînement (22), dans lequelle la distance par rapport à un siège de rotor, avec lequelle le rotor (32) repose sur l'arbre d'entraînement (22), est respectivement la même que par rapport à l'extrémité libre de la partie saillante (32a).

18. Procédé pour faire fonctionner une centrifugeuse (10) selon la revendication 4, en particulier et une autre des revendications précédentes, **caractérisé en ce que** des premières données de la première unité émettrice-réceptrice (48) sont lues pendant le fonctionnement par la deuxième unité émettrice-réceptrice (62), des deuxièmes données sont acquises par un capteur du deuxième support (60) par l'intermédiaire des aimants (50) du premier support (46), les premières et deuxièmes données sont comparées les unes aux autres, lorsque les premières et deuxièmes données concordent le fonctionnement de la centrifugeuse (10) est poursuivi.

19. Procédé selon la revendication 18, **caractérisé en ce que** lorsque les premières et deuxièmes données ne concordent pas la centrifugeuse (10) est éteinte.

20. Procédé selon la revendication 18 ou 19, **caractérisé en ce qu'en** ce lorsque les premières et deuxièmes données ne concordent pas une alarme optique et/ou acoustique est déclenchée.

21. Procédé selon l'une quelconque des revendications 18 à 20, **caractérisé en ce qu'un** identifiant de rotor provenant aussi bien de la première unité émettrice-réceptrice (48) que des aimants (50) du premier support (46) est lu, des vitesses maximales correspondantes de la centrifugeuse (10), lesquelles ne sont pas dépassées lors du fonctionnement, sont associées à cet identifiant de rotor lu.

22. Procédé selon l'une quelconque des revendications 18 à 21, **caractérisé en ce que** lorsqu'une valeur de seuil prédéfinie en ce qui concerne les données fournies par un capteur d'accélération (68) est dépassée, la centrifugeuse (10) est éteinte.
